# EUROPEAN PATENT SPECIFICATION

(11) **EP 1 756 438 B1**
(45) Date of publication and mention of the grant of the patent: **02.10.2013**
(21) Application number: 05742551.4
(22) Date of filing: 04.05.2005
(51) Int. Cl.: E04B 1/24

(54) **Steel framework of a building**
Stahlstruktur eines Gebäudes
Structure acier d'un immeuble

(30) Priority: 10.05.2004 GB 0410307
(43) Date of publication of application: 28.02.2007
(73) Proprietor: Woolstencroft, David, Lancashire FY6 8EW (GB)
(72) Inventor: Woolstencroft, David, Lancashire FY6 8EW (GB)
(74) Representative: Waddington, Richard
(86) International application number: PCT/GB2005/001678
(87) International publication number: WO 2005/108805

(56) References cited:
- EP-A- 0 265 132
- FR-A- 1 261 528
- GB-A- 855 175
- GB-A- 191 223 512
- US-A- 4 630 168
- US-A- 5 082 409
- US-A- 5 857 818
- US-A1- 2002 054 809

## Description

This invention relates to a steel framework of a building, that uses a fixing cover and to a method of protecting a fixing, in particular, but not limited to a fixing cover for a bolt or nut.

When constructing a building from a steel framework structure different elements of the structure are secured together with nuts and bolts. These are typically applied with grease in order to allow the nut and bolt fastenings to be tightened properly. It is also part of the usual procedure to paint the steel structure to deter corrosion. However, a problem arises in that the paint used cannot be applied to the grease that has been used to fasten the fixing. Consequently, it is necessary to perform a degreasing operation of the nut and bolt fixings before paintings can be performed. Alternatively the cover must be etched and primed so that it can be painted.

Covers for screw fasteners are disclosed in EPO265132. Examples of vehicle lug nut covers are disclosed in US2002/054809, US5857818 and US5082409. GB 855175 describes screw thread protectors and GB23512 and FR1261528 describe examples of covers for nuts and bolts.

It is an object of the present invention to address the above mentioned disadvantage.

According to the present invention there is provided a framework and method as set forth in the appended claims. Other features of the invention will be apparent from the dependent claims, and the description which follows.

For a better understanding of the invention, and to show how embodiments of the same may be carried into effect, reference will now be made, by way of example, to the accompanying diagrammatic drawings in which:
Figure 1 is a schematic perspective view of a first embodiment of bolt cover;
Figure 2 is a schematic cross-sectional side view of the first embodiment of bolt cover;
Figure 3 is a schematic view from below of the first embodiment of bolt cover;
Figure 4 is a schematic cross-sectional side view of a second embodiment of bolt cover;
Figure 5 is a schematic side view of a third embodiment of bolt cover; and
Figure 6 is a schematic cross-sectional view of the third embodiment of bolt cover.

In order to overcome the problem of having to degrease and prime a nut or bolt that forms part of a construction joint prior to painting or spraying with concrete, a cover 10 for a bolted joint is provided.

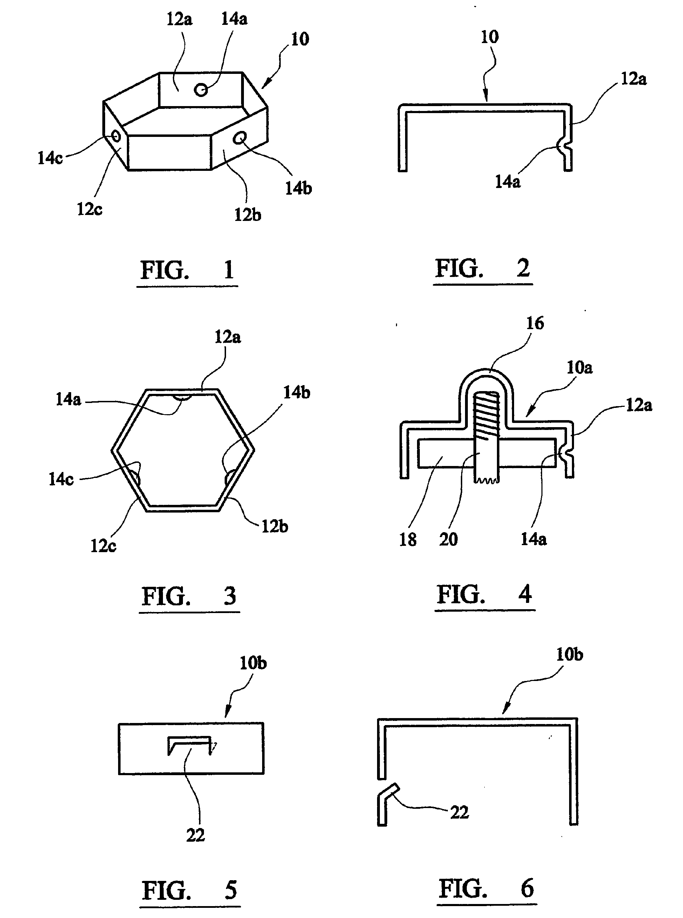

The cover 10 is hexagonal in shape so as to cover a bolt head or nut (as shown schematically in Figure 4). The cover 10 has a body which is made of metal, which would normally be steel or spring steel. In the three spaced side walls 12a, b, c there are inwardly projecting indentations 14a, 14b, 14c.

The inward projections 14a, b, c are in the form of indentations or blisters which are of sufficient depth and extend sufficiently far into the cover 10 to provide an interference fit with a bolt head or nut (see Figure 4) to which the cover 10 is applied.

Many different sizes of cover 10 are envisaged in order to fit any of the large nut and bolt sizes that are available. The size of the inward projections 14a, b, c is chosen to provide an interference fit with the chosen bolt head or nut.

Figure 2 shows a side view of one of the inward projections 14a. The inward projections 14a, b, c are formed by punching or stamping. The shape of the cover 10 is also produced by stamping prior to formation of the inward projections 14a, b, c.

The cover 10 provides a smooth outer surface for subsequent application of paint, concrete spray or another coating medium. The smooth outer surface is provided to maximise the interface for bonding with the paint etc without the need to prime and etch the surfaces of the bolt head, the nut or the bolt thread surfaces. Consequently, much time is saved by simply placing one of the covers over an exposed bolt head or nut for the subsequent application of paint.

Although referred to above as being made of metal, the cover 10 could be moulded from heat resistant material, which may be polyester DMC.

The cover 10 is particularly advantageous when the material for subsequent application is a concrete spray which is typically alkaline. The cover prevents the alkaline material from attacking the bolt or nut and causing corrosion.

The inside of the cover 10 may have additional material inserted therein prior to the cover 10 being applied to a bolt head or nut of a construction joint. Material could either be additional intumescent paint to provide extra protection should a prolonged heat exposure in a fire oxidise away the metal cover, or a grease (or other moisture resistant substance) to protect the bolted joint against corrosion. Alternatively, the additional material may be an adhesive compound to provide an alternative fixture method to the inward projections 14a to 14c referred to above.

Figure 4 shows a second embodiment of cover 10a, which has much in common with the cover 10 discussed above. Like reference numerals have been used for the second embodiment of cover 10a for the same parts. The cover 10a has an additional projection 16 which allows the cover 10a to be placed over a nut 18 through which projects a threaded shank 20 of a bolt. The additional projection 16 may be produced by stamping. Alternatively, the additional projection 16 could be part of a moulding where the cover 10a is made from a heat resistant material, such as polyester.

Figures 5 and 6 show a third embodiment of cover 10b. In this embodiment, which may have the same shape as the first embodiment or the second embodiment the inward projections of the first embodiment 14a to c are replaced with tabs 22, only one of which is shown for clarity, but they have the same locations as shown in Figures 1 and 3 in relation to the additional projections 16. The tabs 22 extend inwardly into the cover 10b in the same way as the additional projection 16a, b, c. However, the tabs 22 break the surface of the material of the cover 10b, having been stamped through during production of the cover 10b. The tabs 22 effectively form gripping elements whereby the cover 10b grips a bolt or bolt head, in the same way as described above in relation to the first embodiment. The additional projection 16 discussed in relation to Figure 4 can also be provided on the embodiment discussed in relation to Figures 5 and 6 when it is desired to place the cover 10b over a nut 18 and a projecting shank 20 of a bolt.

An alternative method of fixing the covers discussed above to a bolt shank 20 is to provide a thread on the inside of the additional projection 16 of the embodiment shown in Figure 4. The thread (not shown) could engage the thread of the shank 20, instead of, or in addition to the inward projections 14a to 14c or tabs 22.

The covers described above all of significant advantages as described above in relation to the first embodiment in that degreasing and etching of nuts and bolt combinations is not required when subsequent painting or spray covering with concrete is to be carried out. Instead, a cover can simply be placed over a bolt head or a nut/bolt combination to provide a cover and a good clean surface which will receive the paint or spray concrete.

## Claims

1. A steel framework of a building comprising a bolted construction joint fixing, to which grease is applied in order to allow a nut (18) and bolt (20) of the joint fixing to be tightened properly; a cover (10) for the construction joint fixing comprising a cover section and an attachment section the cover section being arranged to cover an exposed bolt head or nut (18) of the joint fixing, wherein an outer surface of the cover is adapted to receive a coating, and a coating which coats the outer surface of the cover section and the framework.

2. The steel framework as claimed in claim 1, wherein the coating material is a coating such as paint, a concrete spray or another coating usually requiring surface preparation before application.

3. The steel framework as claimed in claim 1 or claim 2, wherein the cover is made of steel.

4. The steel framework as claimed in any preceding claim, wherein the cover is made of a heat resistant material.

5. The steel framework as claimed in claim 4, in which the heat resistant material is polymeric or ceramic.

6. The steel framework as claimed in claim 4 or claim 5, wherein the cover is made of polyester with a fire retardant element.

7. The steel framework as claimed in any preceding claim, wherein the cover is adapted to fit over a nut and protruding bolt shank.

8. The steel framework as claimed in claim 7, in which the attachment section of the cover is threaded to allow attachment to a bolt shank.

9. The steel framework as claimed in any preceding claim, in which the attachment section of the cover is an insert in the cover section.

10. The steel framework as claimed in any preceding claim, in which the attachment section of the cover comprises a plurality of protrusions adapted to engage a fixing.

11. The steel framework as claimed in claim 10, in which the protrusions (22) break a surface of the attachment section, to form a clip.

12. The steel framework as claimed in claim 10, in which the protrusions form bulges (14a; 14b; 14c) in a surface of the attachment section.

13. The steel framework as claimed in any preceding claim, wherein the cover contains a filler material.

14. The steel framework as claimed in claim 13, in which the filler material is paint, or a grease, or other moisture resistant substance.

15. The steel framework as claimed in claim 13, in which the filler material is an adhesive material that forms an attachment means of the cover.

16. A method of protecting a bolted construction joint fixing of a steel framework of a building which has had grease applied thereto in order to allow a nut (18) and bolt (20) of the construction joint fixing to be tightened properly, the method comprising;
securing a cover (10) to the construction joint fixing by means of an attachment section of the cover, said cover having an outer surface adapted to receive and retain a coating medium, and applying a coating which coats the outer surface of the cover section and the framework.

## Patentansprüche

1. Stahlgerüst für ein Gebäude, das eine Bolzen-Bauwerkverbindungsbefestigung, auf die Fett aufgebracht ist, um zu ermöglichen, dass eine Mutter (18) und ein Bolzen (20) der Verbindungbefestigung geeignet angezogen werden; eine Abdeckung (10) für die Bauwerkverbindungsbefestigung, die einen Abdeckabschnitt und einen Anbringungsabschnitt aufweist, wobei der Abdeckabschnitt dafür ausgelegt ist, einen freiliegenden Bolzenkopf oder eine freiliegende Mutter (18) der Verbindungbefestigung abzudecken, wobei eine äußere Oberfläche der Abdeckung dafür ausgelegt ist, eine Beschichtung aufzunehmen; und eine Beschichtung, mit der die äußere Oberfläche des Abdeckabschnitt und des Gerüsts beschichtet ist, umfasst.

2. Stahlgerüst nach Anspruch 1, wobei das Beschichtungsmaterial eine Beschichtung wie etwa Farbe, ein Betonspray oder eine andere Beschichtung, die gewöhnlich vor der Aufbringung eine Oberflächenvorbereitung erfordert, ist.

3. Stahlgerüst nach Anspruch 1 oder Anspruch 2, wobei die Abdeckung aus Stahl hergestellt ist.

4. Stahlgerüst nach einem vorhergehenden Anspruch, wobei die Abdeckung aus einem wärmebeständigen Material hergestellt ist.

5. Stahlgerüst nach Anspruch 4, wobei das wärmebeständige Material Polymer oder Keramik ist.

6. Stahlgerüst nach Anspruch 4 oder Anspruch 5, wobei die Abdeckung aus Polyester mit einem feuerverzögernden Element hergestellt ist.

7. Stahlgerüst nach einem vorhergehenden Anspruch, wobei die Abdeckung dafür ausgelegt so beschaffen ist, dass sie über eine Mutter und einen vorstehenden Bolzenschaft passt.

8. Stahlgerüst nach Anspruch 7, wobei der Anbringungsabschnitt der Abdeckung mit Gewinde versehen ist, um die Anbringung an einem Bolzenschaft zu ermöglichen.

9. Stahlgerüst nach einem vorhergehenden Anspruch, wobei der Anbringungsabschnitt der Abdeckung ein Einsatz in dem Abdeckabschnitt ist.

10. Stahlgerüst nach einem vorhergehenden Anspruch, wobei der Anbringungsabschnitt der Abdeckung mehrere Vorsprünge aufweist, die dafür ausgelegt sind, mit einer Befestigung in Eingriff zu gelangen.

11. Stahlgerüst nach Anspruch 10, wobei die Vorsprünge (22) eine Oberfläche des Befestigungsabschnitts unterbrechen, um eine Klammer zu bilden.

12. Stahlgerüst nach Anspruch 10, wobei die Vorsprünge in einer Oberfläche des Anbringungsabschnitts Wölbungen (14a; 14b; 14c) bilden.

13. Stahlgerüst nach einem vorhergehenden Anspruch, wobei die Abdeckung ein Füllmaterial enthält.

14. Stahlgerüst nach Anspruch 13, wobei das Füllmaterial Farbe oder ein Feld oder eine andere feuchtigkeitsbeständige Substanz ist.

15. Stahlgerüst nach Anspruch 13, wobei das Füllmaterial ein Klebstoffmaterial ist, das ein Anbringungsmittel für die Abdeckung bildet.

16. Verfahren zum Schützen einer Bolzen-Bauwerkverbindungbefestigung eines Stahlgerüsts für ein Gebäude, auf die Fett aufgebracht worden ist, um zu ermöglichen, dass eine Mutter (18) und ein Bolzen (20) der Bauwerkverbindungsbefestigung geeignet angezogen werden, wobei das Verfahren Folgendes umfasst:
Befestigen einer Abdeckung (10) an der Bauwerkverbindungbefestigung mittels eines Anbringungsabschnitts der Abdeckung, wobei die Abdeckung eine äußere Oberfläche besitzt, die dafür ausgelegt ist, ein Beschichtungsmedium aufzunehmen und zu halten, und Aufbringen einer Beschichtung, mit der die äußere Oberfläche des Abdeckabschnitt und des Gerüsts beschichtet wird.

## Revendications

1. Charpente en acier d'un bâtiment comprenant une fixation de joint de construction boulonnée, sur laquelle est appliquée de la graisse afin de permettre à un écrou (18) et à un boulon (20) de la fixation de joint d'être serrés correctement ; un recouvrement (10) pour la fixation de joint de construction comprenant une section de recouvrement et une section d'attache, la section de recouvrement étant agencée de manière à recouvrir une tête de boulon ou un écrou exposé(e) (18) de la fixation de joint, une surface extérieure du recouvrement étant conçue pour recevoir un revêtement, et un revêtement qui recouvre la surface extérieure de la section de recouvrement et de la charpente.

2. Charpente en acier selon la revendication 1, dans laquelle le matériau de revêtement est un revêtement tel qu'une peinture, du béton projeté ou un autre revêtement nécessitant généralement une préparation de la surface avant l'application.

3. Charpente en acier selon la revendication 1 ou la revendication 2, dans laquelle le recouvrement est constitué d'acier.

4. Charpente en acier selon l'une quelconque des revendications précédentes, dans laquelle le recouvrement est constitué d'un matériau résistant à la chaleur.

5. Charpente en acier selon la revendication 4, dans laquelle le matériau résistant à la chaleur est polymère ou céramique.

6. Charpente en acier selon la revendication 4 ou la revendication 5, dans laquelle le recouvrement est constitué de polyester comprenant un élément ignifuge.

7. Charpente en acier selon l'une quelconque des revendications précédentes, dans laquelle le recouvrement est conçu pour s'adapter sur un écrou et une tige de boulon saillante.

8. Charpente en acier selon la revendication 7, dans laquelle la section d'attache du recouvrement est filetée pour permettre de l'attacher à une tige de boulon.

9. Charpente en acier selon l'une quelconque des revendications précédentes, dans laquelle la section d'attache du recouvrement est un insert dans la section de recouvrement.

10. Charpente en acier selon l'une quelconque des revendications précédentes, dans laquelle la section d'attache du recouvrement comprend une pluralité de saillies conçues pour s'engager avec une fixation.

11. Charpente en acier selon la revendication 10, dans laquelle les saillies (22) interrompent une surface de la section d'attache, pour former un crampon.

12. Charpente en acier selon la revendication 10, dans laquelle les saillies forment des renflements (14a ; 14b ; 14c) dans une surface de la section d'attache.

13. Charpente en acier selon l'une quelconque des revendications précédentes, dans laquelle le recouvrement contient un matériau de remplissage.

14. Charpente en acier selon la revendication 13, dans laquelle le matériau de remplissage est une peinture, ou une graisse, ou une autre substance résistant à l'humidité.

15. Charpente en acier selon la revendication 13, dans laquelle le matériau de remplissage est un matériau adhésif qui forme un moyen d'attache du recouvrement.

16. Procédé de protection d'une fixation de joint de construction boulonnée d'une charpente en acier d'un bâtiment sur laquelle de la graisse a été appliquée afin de permettre à un écrou (18) et à un boulon (20) de la fixation de joint de construction d'être serrés correctement, le procédé comprenant :
la fixation d'un recouvrement (10) à la fixation de joint de construction au moyen d'une section d'attache du recouvrement, ledit recouvrement ayant une surface extérieure conçue pour recevoir et retenir un milieu de revêtement, et l'application d'un revêtement qui recouvre la surface extérieure de la section de recouvrement et de la charpente.
